# EUROPEAN PATENT SPECIFICATION

(11) **EP 3 750 229 B1**
(45) Date of publication and mention of the grant of the patent: **24.07.2024**
(21) Application number: 19711601.5
(22) Date of filing: 18.03.2019
(51) Int. Cl.: H02J 9/02, H02J 9/06, H02M 1/08

(54) **EMERGENCY LIGHTING POWER SUPPLY WITH COMBINED ZERO-CURRENT DETECTION**
STROMVERSORGUNG FÜR NOTBELEUCHTUNG MIT KOMBINIERTER NULLSTROMDETEKTION
ALIMENTATION ÉLECTRIQUE D'ÉCLAIRAGE D'URGENCE AVEC DÉTECTION COMBINÉE DE COURANT NUL

(30) Priority: 22.03.2018 GB 201804960
(43) Date of publication of application: 16.12.2020
(73) Proprietor: Tridonic GmbH & Co. KG, 6851 Dornbirn (AT)
(72) Inventor: MAKWANA, Deepak, Newcastle Upon Tyne NE5 2DJ (GB); SHUKLA, Jagjitpati, Durham DL16 6DR (GB)
(74) Representative: Rupp, Christian
(86) International application number: PCT/EP2019/056705
(87) International publication number: WO 2019/179944

(56) References cited:
- EP-A1- 2 760 116
- WO-A2-2016/134399
- GB-A- 2 546 117
- US-A1- 2011 062 934

## Description

### 1. Field of the invention

The present invention relates to a power supply unit for operating a lighting means, especially an emergency lighting means. In particular, the invention relates to an emergency power supply unit - also known as emergency converter - for operating an emergency lighting means, which emergency lighting means preferably comprises at least one light-emitting diode (in short: LED).

The present invention also relates to an emergency lighting device comprising an emergency power supply unit according to the present invention and an emergency lighting means, which preferably comprises at least one LED, as well as to an operating method for operating an emergency power supply unit according to the present invention. Although, the invention is especially related to emergency lighting devices, the invention is generally applicable to normal lighting means, such as luminaries, and appropriate lighting systems.

### 2. Technical background

In the prior art, emergency power supply units for operating an emergency lighting means are known, wherein such an emergency power supply unit forms together with an emergency lighting means an emergency lighting device.

An example of such supplies could be found in GB 2 546 117.

Alternatively, such an emergency power supply unit may be part of a normal lighting device with an emergency lighting functionality, in which either the lighting means for the normal lighting are used as emergency lighting means or an additional emergency lighting means is provided for the emergency lighting. Typically, an emergency lighting means is adapted to be operated in an emergency operating condition (mains voltage failure), in that it consumes less electrical energy and preferably provides light of a lower intensity compared to a lighting means for the normal lighting.

An important function of emergency lighting devices and, thus, of emergency lighting means in a closed building is to illuminate emergency exists in case of an evacuation of the building is needed. Such scenarios might be a fire alarm or a mains voltage breakdown or the like (emergency operating conditions). An emergency lighting device therefore comprises a self-sustaining voltage supply, which is used to supply electrical energy to the emergency lighting means in case of the mains voltage loss. This voltage supply comprises an energy storage unit - e.g. a rechargeable battery - as its basic element, which is charged by means of a charging unit from an external electrical energy source, in particular from mains voltage, during normal operating conditions and, thus, normal lighting conditions (no mains voltage failure) and which is used as an energy supply in case of a mains voltage failure (emergency operating conditions and, thus, emergency lighting conditions) to supply the emergency lighting means with electrical energy.

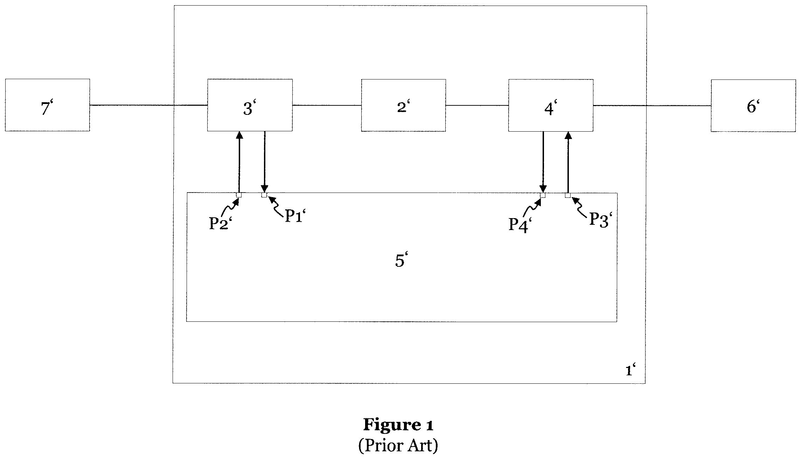

Such an emergency lighting and, thus, emergency lighting devices are well known in the prior art. Therein, an emergency power supply unit 1', as shown in Figure 1, comprises an energy storage unit 2' (e.g. a rechargeable battery), a charging unit 3' with a first actively switched converter, a driving unit 4' with a second actively switched converter and a control unit 5'. The first converter of the charging unit 3' is configured to charge the energy storage unit 2' with electrical energy from an external electrical energy source 7', such as mains, and the second converter of the driving unit 4' is configured to supply the emergency lighting means 6' with electrical energy from the energy storage unit 2'. The control unit 5' is configured to operate the first converter of the charging unit 3' and the second converter of the driving unit 4' on the basis of feedback information that is fed back from each of the first and second converter.

Actively switched converters are well known to the skilled person and examples thereof are buck converters, boost converters, flyback converters etc. Typically, an actively switched converter comprises at least one switch and at least one energy storage, such as an inductor. By controlling the switching of the at least one switch and, thus, the cyclically charging and discharging of the at least one energy storage an input voltage may be converted by the actively switched converter into a lower or higher output voltage, depending on the type of actively switched converter being used. In particular, by controlling the switching on and off of the switch, especially the length of the switch-on phase (conducting phase) of the switch and/or the length of the switch-off phase (non-conducting phase) of the switch, the value of the output voltage provided by the actively switched converter from the input voltage may be controlled. For the control of the actively switched converter control signals such as PWM-signals may be used.

The feedback information that is fed back from an actively switched converter and used for operating the actively switched converter, in particular for controlling the switching of the actively switched converter, may indicate the current flowing through the energy storage of the converter, in particular the zero crossings of the current flowing through the energy storage, during the operation of the actively switched converter.

According to the prior art emergency power supply unit 1' of Figure 1, at least four pins P1', P2', P3' and P4' of the control unit 5' are needed for controlling the charging unit 3' and the driving unit 4' on the basis of feedback information fed back from the charging unit 3' and driving unit 4', respectively. In detail, the charging unit 3' feeds back its feedback information, such as information indicating the current flowing through the energy storage of the first actively switched converter, to a first pin P1' of the control unit 5' and the control unit 5' sends control signals via a second Pin P2' to the charging unit 3' in order to control the switching of the first actively switched converter. In addition, the control unit 5' sends control signals via a third Pin P3' to the driving unit 4' in order to control the switching of the second actively switched converter and the driving unit 4' feeds back its feedback information, such as information indicating the current flowing through the energy storage of the second actively switched converter, to a fourth pin P4' of the control unit 5'.

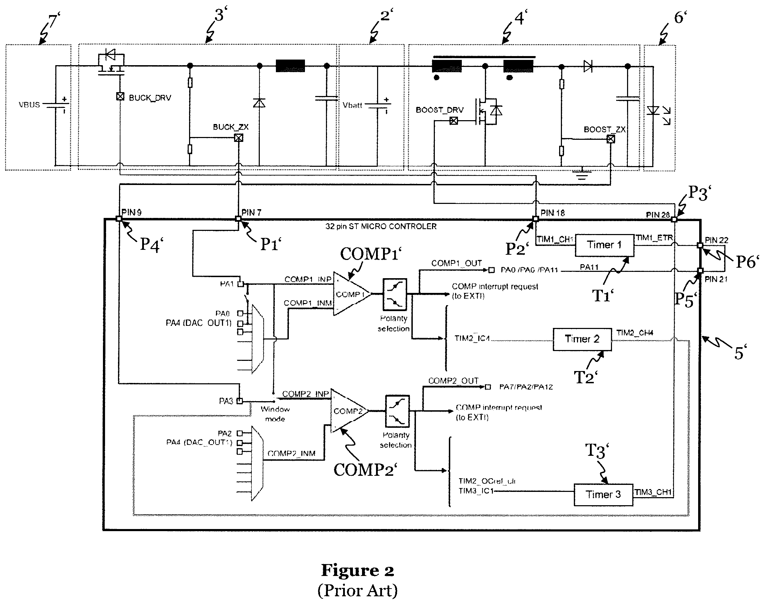

In some cases, even more than four pins of a control unit of a prior art emergency power supply unit are needed. Such a case is shown in Figure **2****.** In the emergency power supply unit of Figure 2 the energy storage unit 2' comprises a rechargeable battery, the charging unit 3' comprises a buck converter and the driving unit 4' comprises a boost converter. The control unit is a microcontroller with 32 pins, such as the 32-pin microcontroller *STM32F051K8U7TR* from the company *STMicroelectronics,* wherein six pins P1' to P6' are needed for controlling the buck converter and the boost converter on the basis of feedback information fed back from the buck converter and boost converter, respectively. Moreover, in order to operate both the buck converter and boost converter in the borderline conduction mode (also known as critical conduction mode) two comparators COMP1' and COMP2' as well as three timers T1' (Timer 1), T2' (Timer 2) and T3' (Timer 3) of the microcontroller 5' are needed.

The borderline conduction mode is well known to the skilled person. When an actively switched converter is operated in the borderline conduction mode the current flowing through the energy storage (e.g. inductor) of the converter will fall to zero during the discharging phase of the energy storage and the switch of the actively switched converter will be switched as soon as the current through the energy storage reaches zero ampere (zero crossing of the current) in order to charge the energy storage again. That is, in the borderline conduction mode the zero crossing of the current flowing through the energy storage of an actively switched converter causes the switching of the switch of the actively switched converter in order to stop the discharging of the energy storage and start the charging of the energy storage again.

The feedback information indicating the current flowing through the energy storage (inductor) of the buck converter of the charging unit 3' and, thus, indicating the zero crossings of this current is fed back to a first pin P1' (PIN7) of the microcontroller 5'. This feedback information is fed back in the form of a voltage measured at a voltage divider in the buck converter (cf. node "BUCK_ZX" in Figure 2). For monitoring or detecting the zero crossings of the current through the energy storage of the buck converter, the first comparator COMP1' of the control unit 5' is used.

The feedback information indicating the current flowing through the energy storage of the boost converter of the driving unit 4' and, thus, indicating the zero crossings of this current is fed back to a fourth pin P4' (PIN9) of the microcontroller 5'. This feedback information is fed back in the form of a voltage measured at a voltage divider in the boost converter (cf. node "BOOST_ZX" in Figure 2). For monitoring or detecting the zero crossings of the current through the energy storage of the boost converter, the second comparator COMP2' of the control unit 5' is used.

The timer T3' is configured to generate the control signal for switching the switch of the boost converter of the driving unit 4' on the basis of the detection result of the comparator COMP2'. In particular, the timer T3' is configured to generate the control signal for switching on the switch of the boost converter from the non-conducting state to the conducting state when the detection result of the comparator COMP2' indicates a zero crossing of the current flowing through the energy storage of the boost converter (operation in the borderline conduction mode). The control signal from the timer T3' is output via the third pin P3' (PIN 28) of the microcontroller 5' to the boost converter, in particular to the switch of the boost converter (cf. node "BOOST_DRV" in Figure 2).

Since in the microcontroller 5' of Figure 2 the timer T2' is electrically connected to the node PA3, to which also the fourth pin P4' is electrically connected and, thus, to which the feedback information of the buck converter is fed back, the timer T2' cannot be used for controlling the buck converter, in particular the switch of the buck converter. Therefore, the timer T1' must be used for generating the control signal for the buck converter of the charging unit 3'. When using the timer T1' for this purpose the fifth pin P5' (PIN21) and the sixth pin P6' (PIN22) of the microcontroller 5' of Figure 2 have to be short circuited. As a result, the timer T1' is configured to generate the control signal for switching the switch of the buck converter of the charging unit 3' on the basis of the detection result of the comparator COMP1' (cf. Figure 2). In particular, the timer T1' is configured to generate the control signal for switching on the switch of the buck converter from the non-conducting state to the conducting state when the detection result of the comparator COMP1' indicates a zero crossing of the current flowing through the energy storage of the buck converter (operation in the borderline conduction mode). The control signal from the timer T1' is output via the second pin P2' (PIN 18) of the microcontroller 5' to the buck converter, in particular to the switch of the buck converter (cf. node "BUCK_DRV" in Figure 2).

Each pin of a control unit of an emergency power supply unit used for operating the charging unit and driving unit of the emergency power supply unit cannot be used for additional features, such as a DALI-functionality ("*DALI*" = *"Digital Addressable Lighting Interface*", a known industry standard for digital lighting control).

Therefore, in the prior art, it is not possible to use the same control unit, such as a microcontroller, for a basic version of an emergency power supply unit, as described above and shown in Figures 1 and 2, as well as for a more complex version of such an emergency power supply unit comprising additional features, such as a DALI-functionality. This increases the production costs for producing emergency power supply units of a basic version and emergency power supply units of a more complex version comprising additional features compared to the basic version, because different control units need to be used for the different versions. For example, when implementing additional features, such as a DALI-functionality, in the emergency power supply unit of Figure 2, one needs to use a microcontroller with more pins compared to the 32-pin microcontroller shown in Figure 2**.**

Therefore, it is an object of the present invention to provide an emergency power supply unit suitable for a basic version as well as a more complex version with additional features besides the feedback control of the charging unit and driving unit of the emergency power supply unit, without the need of using different control units for the different versions of the emergency power supply unit. A further object is to provide an emergency power supply unit, wherein the production costs for producing a basic version and a more complex version of the emergency power supply unit are reduced with respect to the prior art.

These and other objects, which become apparent upon reading the following description, are solved by the subject-matters of the independent claims. The dependent claims refer to preferred embodiments of the invention.

### 3. Summary of the invention

According to the present invention, an emergency power supply unit for operating an emergency lighting means, which emergency lighting means preferably comprises at least one LED, is provided, wherein the emergency power supply unit comprises:
- an energy storage unit, preferably a rechargeable battery;
- a charging unit comprising a first actively switched converter with at least a first switch and at least a first energy storage, wherein the first actively switched converter is configured to charge the energy storage unit with electrical energy from an external electrical energy source;
- a driving unit comprising a second actively switched converter with at least a second switch and at least a second energy storage, wherein the second actively switched converter is configured to supply the emergency lighting means with electrical energy from the energy storage unit; and
- a control unit configured to operate the first actively switched converter based on feedback information fed back from the first actively switched converter and the second actively switched converter based on feedback information fed back from the second actively switched converter; characterized in that
- the control unit is configured to receive via a single first pin the feedback information fed back from the first actively switched converter and the feedback information fed back from the second actively switched converter.

With other words, the present invention proposes an emergency power supply unit for operating an emergency lighting means, in which the charging unit, in particular the first actively switched converter, and the driving unit, in particular the second actively switched converter, each provide feedback information to the same first pin of the control unit. That is, preferably, a first feedback path electrically connects the first actively switched converter of the charging unit to the first pin of the control unit for feeding back feedback information from the first actively switched converter to the first pin of the control unit; and a second feedback path electrically connects the second actively switched converter of the driving unit to the same first pin of the control unit for feeding back feedback information from the second actively switched converter to the same first pin of the control unit.

Therefore, in the emergency power supply unit according to the present invention less pins are needed for feeding back feedback information from the charging unit and driving unit to the control unit in comparison to a prior art emergency power supply unit, such as the one of Figures 1 and 2**.** Namely, according to the prior art at least two pins of the control unit are needed: one pin for feeding back the feedback information from the charging unit and another pin for feeding back the feedback information from the driving unit. In contrast thereto, in the emergency power supply unit according to the present invention the feedback information from the charging unit and the feedback information from the driving unit are both fed back respectively supplied to the same pin (the first pin) of the control unit.

Thus, according to the present invention at least one pin less of the control unit is needed for controlling the charging unit and driving unit on the basis of respective feedback information in comparison to the state of the art.

This is advantageous, as the free pin of the control unit, not used in the emergency power supply unit for feeding back feedback information, can be used for additional features, such as a DALI-functionality. An example of a DALI-functionality is DALI dimming or communication via a DALI bus. Therefore, the same control unit can be used for a basic version of the emergency power supply unit as well as for a more complex version of the emergency power supply unit with at least one additional feature compared to the basic version.

In the context of the present invention, the term "power supply unit" is mainly referred to a ballast or a comparable device for supplying electrical energy to a lighting means.

Preferably, the first actively switched converter comprises one switch and one energy storage and/or the second actively switched converter comprises one switch and one energy storage.

The first switch of the first actively switched converter and/or the second switch of the second actively switched converter are preferably a transistor, in particular a field-effect transistor (FET), such as a metal-oxide-semiconductor field-effect transistor (MOSFET).

The first energy storage of the first actively switched converter and/or the second energy storage of the second actively switched converter are preferably an inductor or a choke.

The functionality of an actively switched converter is known to the skilled person. Preferably, when the switch of the actively switched converter is switched on, i.e. switched from the non-conducting state to the conducting state, then the current flowing through the energy storage of the converter increases and, thus, the energy storage is charged (charging phase of the energy storage) while the switch is in the conducting state. Further, preferably, when the switch is switched off, i.e. switched from the conducting state to the non-conducting state, then the current flowing through the energy storage decreases and, thus, the energy storage is discharged (discharging phase of the energy storage) while the switch is in the non-conducting state. Therefore, by controlling the switching of the switch of the actively switched converter the cyclically charging and discharging of the energy storage of the actively switched converter may be controlled and, thus, the conversion of the input voltage of the converter to the output voltage of the converter may be controlled. Thus, depending on the type of actively switched converter, the input voltage may be converted by the converter into a higher or lower output voltage, wherein the value of the output voltage may be controlled by controlling the switching of the switch of the actively switched converter.

The external electrical energy source is preferably mains or an electrical energy source providing electrical energy from mains. For example, the external electrical energy source may be a converter stage with an actively switched converter or a passive converter that provides from mains voltage a supply voltage for a lighting system, in which the emergency power supply unit may be used.

In the emergency power supply unit according to the present invention, the charging unit with the first actively switched converter is preferably a first converter stage for charging the energy storage unit with electrical energy from the external electrical energy source (when the emergency power supply unit is electrically connected to the external electrical energy source). The driving unit with the second actively switched converter is preferably a second converter stage for supplying the emergency lighting means with electrical energy from the energy storage unit (when the emergency lighting means is electrically connected to the emergency power supply unit). That is, the driving unit is configured to drive or operate the emergency lighting means by supplying the emergency lighting means with electrical energy from the energy storage unit.

The energy storage unit is preferably a rechargeable battery or a comparable rechargeable electronic element configured to store electrical energy.

Preferably, the feedback information from the first actively switched converter indicates the current flowing through the first energy storage, in particular zero crossings of the current flowing through the first energy storage, during the operation of the first actively switched converter; and/or the feedback information from the second actively switched converter indicates the current flowing through the second energy storage, in particular zero crossings of the current flowing through the second energy storage, during the operation of the second actively switched converter.

The term "zero crossings" is preferably not limited to its plural meaning but can also be understood as only one zero crossing. The zero crossing of a current preferably corresponds to the moment or time, when the current reaches zero ampere.

Preferably, the feedback information from the first actively switched converter is an electrical signal, such as a voltage measured in the first actively switched converter that indicates or reflects the current flowing through the first energy storage. This current increases during the charging phase of the first energy storage and decreases during the discharging phase, while the first actively switched converter is operated by the control unit.

Preferably, the feedback information from the second actively switched converter is an electrical signal, such as a voltage measured in the second actively switched converter that indicates or reflects the current flowing through the second energy storage. This current increases during the charging phase of the second energy storage and decreases during the discharging phase, while the second actively switched converter is operated by the control unit.

Therefore, the feedback information from the first actively switched converter preferably indicates or reflects a zero crossing of the current flowing through the first energy storage during each switching cycle or control cycle, while the first actively switched converter is operated by the control unit. Preferably, the same applies to the feedback information from the second actively switched converter.

As a result, the control unit is preferably configured to control the switching of the first switch of the first actively switched converter in the borderline conduction mode on the basis of the feedback information from the first actively switched converter indicating the current through the first energy storage and, thus, the zero crossings of this current. The control unit is preferably also configured to control the switching of the second switch of the second actively switched converter in the borderline conduction mode on the basis of the feedback information from the second actively switched converter indicating the current through the second energy storage and, thus, the zero crossings of this current.

As already mentioned above, when an actively switched converter is operated in the borderline conduction mode, the discharging of the energy storage (e.g. inductor) of the actively switched converter is stopped at the time of the zero crossing of the current flowing through the energy storage, preferably by switching on the switch of the actively switched converter from the non-conducting state to the conducting state.

Furthermore, the control unit is preferably configured to monitor via the single first pin the zero crossings of the current flowing through the first energy storage during operation of the first actively switched converter, and the zero crossings of the current flowing through the second energy storage during operation of the second actively switched converter.

Moreover, the control unit preferably comprises a comparator for monitoring the zero crossings of the current flowing through the first energy storage during operation of the first actively switched converter and the zero crossings of the current flowing through the second energy storage during operation of the second actively switched converter; and, preferably, one input of the comparator is electrically connected to the single first pin of the control unit.

That is, the control unit preferably comprises a comparator configured to monitor or detect on the basis of the feedback information fed back from the first actively switched converter to the first pin of the control unit the zero crossings of the current flowing through the first energy storage of the first actively switched converter (while the first converter is operated by the control unit) and configured to monitor or detect on the basis of the feedback information fed back from the second actively switched converter to the first pin of the control unit the zero crossings of the current flowing through the second energy storage of the second actively switched converter (while the second converter is operated by the control unit).

Therefore, the control unit of the emergency power supply unit according to the present invention preferably uses only one comparator for evaluating the feedback information from the charging unit and the feedback information from the driving unit. In contrast thereto, in a prior art emergency power supply unit two comparators are used (cf. Figure 2), namely one comparator for evaluating the feedback information from the charging unit and another comparator for evaluating the feedback information from the driving unit. As a result, the emergency power supply unit according to the present invention is advantageous, as the comparator of the control unit, which is not used for evaluating the feedback information from the charging unit and driving unit, can be used to implement additional features in the emergency power supply unit. Alternatively, a control unit with only one comparator may be used for the emergency power supply unit according to the present invention, which reduces the costs for implementing the control unit and, thus, the emergency power supply unit.

Preferably, the control unit is configured to operate the first actively switched converter via a second pin, in particular by sending control signals via the second pin to the first actively switched converter; and the control unit is configured to operate the second actively switched converter via a third pin, in particular by sending control signals via the third pin to the second actively switched converter.

That is, preferably only three pins of the control unit are needed for operating the first actively switched converter of the charging unit and the second actively switched converter of the driving unit on the basis of feedback information fed back from the first and second actively switched converter, respectively. Namely, according to the present invention, the feedback information from the first converter and the feedback information from the second converter are both fed back to the same first pin of the control unit and, preferably, the control unit controls the first converter via a second pin and the second converter via a third pin.

In contrast thereto, in the prior art emergency power supply unit at least four pins of the control unit (cf. Figure 1) or at least six pins of the control unit (cf. Figure 2) are used for operating the first converter of the charging unit and the second converter of the driving unit on the basis of feedback information from the first converter and the second converter, respectively. As a result, the present invention is advantageous in comparison to the prior art, as the pins that are not used for operating the charging unit and driving unit may be used for implementing additional features in the emergency power supply unit.

Further, the control unit is preferably configured to operate only one of the first actively switched converter and the second actively switched converter at the same time.

That is, the control unit is preferably configured to operate the first actively switched converter while the second actively switched converter is not operated, and to operate the second actively switched converter while the first actively switched converter is not operated. As a result, only feedback information from one of the first actively switched converter and the second actively switched converter is fed back to the first pin of the control unit at the same time.

Preferably, the first actively switched converter feeds back feedback information to the first pin only when it is operated by the control unit, i.e. when the control unit controls the switching of the first switch; and the second actively switched converter feeds back feedback information to the first pin only when it is operated by the control unit, i.e. when the control unit controls the switching of the second switch.

Namely, preferably, only when the first switch of the first actively switched converter is actively switched by the control unit (cyclically switching the first switch on and off), the first energy storage gets charged and discharged and, thus, a current flowing through the first energy storage may be measured and fed back as feedback information in the form of a measurement signal to the first pin of the control unit. The same applies to the second converter. That is, preferably, only when the second switch of the second actively switched converter is actively switched by the control unit (cyclically switching the second switch on and off), the second energy storage gets charged and discharged and, thus, a current flows through the second energy storage that may be measured and fed back as feedback information in the form of a measurement signal to the first pin of the control unit.

Furthermore, in a charging operation state of the emergency power supply unit the control unit is preferably configured to operate only the first actively switched converter based on the feedback information fed back from the first actively switched converter via the single first pin to the control unit in order to charge the energy storage unit with electrical energy from the external electrical energy source.

Preferably, the control unit operates the emergency power supply unit in the charging operation state during normal operating conditions (no mains voltage failure) and, thus, normal lighting conditions of a lighting system, in which the emergency power supply unit may be used. Therefore, when there is no mains voltage failure, the control unit preferably operates only the charging unit, in particular the first actively switched converter, in order to charge the energy storage unit with electrical energy from the external electrical energy source, which preferably is mains or an energy source that provides electrical energy from mains. This is important, so that the energy storage unit is fully charged and, thus, can provide electrical energy for driving the emergency lighting means in the case of emergency conditions (mains voltage failure).

Moreover, in an emergency operation state of the emergency power supply unit the control unit is preferably configured to operate only the second actively switched converter based on the feedback information fed back from the second actively switched converter via the single first pin to the control unit in order to supply the emergency lighting means with electrical energy from the energy storage unit.

Preferably, the control unit operates the emergency power supply unit in the emergency operation state during emergency operating conditions (mains voltage failure) and, thus, emergency lighting conditions of a lighting system, in which the emergency power supply unit may be used. Therefore, when there is mains voltage failure, the control unit preferably operates only the driving unit, in particular the second actively switched converter, in order to supply the emergency lighting means with electrical energy from the energy storage unit. This is important, so that the emergency lighting means can provide an emergency lighting in the case of emergency operating conditions (mains voltage failure).

Preferably, the control unit is configured to operate the first actively switched converter in the borderline conduction mode based on the feedback information fed back from the first actively switched converter via the single first pin to the control unit, and the second actively switched converter in the borderline conduction mode based on the feedback information fed back from the second actively switched converter via the single first pin to the control unit.

In particular, the control unit is configured to operate the first converter in the borderline conduction mode based on the feedback information fed back from the first converter to the first pin of the control unit, which feedback information preferably indicates the current flowing through the first energy storage of the first converter and, thus, indicates the zero crossings of this current. The same applies for the second converter. That is, the control unit is preferably configured to operate the second converter in the borderline conduction mode based on the feedback information fed back from the second converter to the first pin of the control unit, which feedback information preferably indicates the current flowing through the second energy storage of the second converter and, thus, indicates the zero crossings of this current.

Preferably, the emergency power supply unit according to the present invention, as described above, comprises a first feedback path electrically connecting the first actively switched converter with the single first pin of the control unit for feeding back the feedback information from the first actively switched converter to the single first pin of the control unit; and a first switching unit configured to selectively interrupt the first feedback path.

That is, the emergency power supply unit preferably comprises a first switching unit, which is configured to selectively prevent that feedback information is supplied from the first actively switched converter to the first pin of the control unit during operation of the first actively switched converter.

The first switching unit may be part of the first actively switched converter.

The emergency power supply unit preferably comprises a first measuring unit for measuring the feedback information that is provided from the first actively switched converter via the first feedback path to the first pin of the control unit, wherein the first measuring unit is a part of the first feedback path. The first measuring unit may be a voltage divider or a comparable electronic element configured to measure as feedback information a voltage indicating or reflecting the current flowing through the first energy storage of the first converter.

In particular, the first switching unit may be part of the first measuring unit.

The first switching unit may be controlled by a control signal send from the control unit to the first actively switched converter for controlling the switching of the first switch of the first actively switched converter.

The first switching unit may comprise a switch, such as a transistor, that is configured to selectively interrupt the first feedback path when it is in the non-conducting state.

As a result, it is possible that the control unit operates the first actively switched converter of the charging unit and the second actively switched converter of the driving unit at the same time, wherein only feedback information from the second actively switched converter is received at the first pin of the control unit when the first switching unit prevents, by interrupting the first feedback path, feedback information from the first actively switched converter to be supplied to the first pin of the control unit.

Moreover, the control unit is preferably configured to control the first switching unit to interrupt the first feedback path; and during the interruption of the first feedback path by the first switching unit the control unit is preferably configured to operate at the same time the second actively switched converter in the borderline conduction mode based on the feedback information fed back from the second actively switched converter to the single first pin of the control unit, and the first actively switched converter in the discontinuous conduction mode or continuous conduction mode.

This is advantageous, because as a result of controlling the first switching unit to interrupt the first feedback path, no feedback information is fed back from the first actively switched converter to the first pin of the control unit and, thus, only feedback information from the second actively switched converter is fed back to the first pin of the control unit, which may be used by the control unit to operate the second converter in the borderline conduction mode while operating the first converter in the discontinuous or continuous conduction mode. For operating the first actively switched converter in the discontinuous or continuous conduction mode the control unit does not need feedback information from the first converter indicating zero crossings of the current flowing through the first energy storage of the first converter.

The discontinuous conduction mode and continuous conduction mode are well known. When an actively switched converter is operated in the discontinuous conduction mode, the switch of the converter is not immediately switched on again when a zero crossing of the current flowing through the energy storage (e.g. inductor) of the converter is detected, as it is the case in the borderline conduction mode, but the switch is kept in the non-conducting state for a predetermined time period after the zero crossing of the current, before the switch is switched on from the non-conducting to the conducting state.

When an actively switched converter is operated in the continuous conduction mode, the switching of the switch of the converter is controlled such that the current flowing through the energy storage of the converter never reaches zero ampere, i.e. no zero crossings occur during the operation. This may be achieved by switching off the switch from the conducting into the non-conducting state for an off-time period, which is chosen such that the current flowing through the energy storage of the converter and decreasing while the switch is switched off does not reach zero ampere.

Preferably, the control unit is configured to operate the first actively switched converter and the second actively switched converter at the same time upon receiving a control signal from outside the emergency power supply unit. For example, when the emergency power supply unit or an emergency lighting device, in which the emergency power supply unit may be arranged, comprises a test button or a test switch, then activation of the test button or the test switch may generate an external control signal that causes the control unit to operate the first and second actively switched converter at the same time, in order to test the functionality of the emergency power supply unit. That is, preferably, when a test switch is activated, the control unit operates the first actively switched converter and the second actively switched converter at the same time.

Preferably, the control unit operates the first actively switched converter in the borderline conduction mode and, when a special event occurs, such as activation of a test switch, the control unit changes the operation of the first actively switched converter from the borderline conduction mode to the discontinuous or continuous conduction mode. Furthermore, when the special event occurs (e.g. activation of the test switch), the control unit preferably controls the first switching unit to interrupt the first feedback path and operates the second actively switched converter in the borderline conduction mode on the basis of the feedback information fed back from the second actively switched converter to the first pin of the control unit, while the first actively switched converter is operated in the discontinuous or continuous conduction mode.

Preferably, the control unit is configured to control the first switching unit to interrupt the first feedback path, when the control unit operates the first and second actively switched converter at the same time.

In particular, the control unit is configured to control the first switching unit to interrupt the first feedback path, when the control unit operates at the same time the first actively switched converter in the continuous conduction mode or in the discontinuous conduction mode and the second actively switched converter in the borderline conduction mode on the basis of the feedback information fed back from the second actively switched converter to the first pin of the control unit.

Preferably, the emergency power supply unit according to the present invention, as described above, comprises a second feedback path electrically connecting the second actively switched converter with the single first pin of the control unit for feeding back the feedback information from the second actively switched converter to the single first pin of the control unit; and a second switching unit configured to selectively interrupt the second feedback path.

That is, the emergency power supply unit preferably comprises a second switching unit configured to selectively interrupt the second feedback path in order to prevent that the second feedback path constantly draws electrical energy from the energy storage unit. Moreover, the second switching unit is preferably configured to selectively prevent that feedback information is supplied from the second actively switched converter to the first pin of the control unit during operation of the second actively switched converter.

The second switching unit may be part of the second actively switched converter.

The emergency power supply unit preferably comprises a second measuring unit for measuring the feedback information that is provided from the second actively switched converter via the second feedback path to the first pin of the control unit, wherein the second measuring unit is a part of the second feedback path. The second measuring unit may be a voltage divider or a comparable electronic element configured to measure as feedback information a voltage indicating or reflecting the current flowing through the second energy storage of the second converter.

In particular, the second switching unit may be part of the second measuring unit.

The second switching unit may be controlled by a control signal send from the control unit to the second actively switched converter for controlling the switching of the second switch of the second actively switched converter.

The second switching unit may comprise a switch, such as a transistor, that is configured to selectively interrupt the second feedback path when it is in the non-conducting state.

As a result of the second switching unit, it is possible that the control unit operates the first actively switched converter of the charging unit and the second actively switched converter of the driving unit at the same time, wherein only feedback information from the first actively switched converter is received at the first pin of the control unit when the second switching unit prevents, by interrupting the second feedback path, feedback information from the second actively switched converter to be supplied to the first pin of the control unit.

Moreover, the control unit is preferably configured to control the second switching unit to interrupt the second feedback path; and during the interruption of the second feedback path by the second switching unit the control unit is preferably configured to operate at the same time the first actively switched converter in the borderline conduction mode based on the feedback information fed back from the first actively switched converter to the single first pin of the control unit, and the second actively switched converter in the discontinuous conduction mode or continuous conduction mode.

Preferably, the control unit is configured to control the second switching unit to interrupt the second feedback path, when the control unit operates the first and second actively switched converter at the same time.

In particular, the control unit is configured to control the second switching unit to interrupt the second feedback path, when the control unit operates at the same time the second actively switched converter in the continuous conduction mode or in the discontinuous conduction mode and the first actively switched converter in the borderline conduction mode on the basis of the feedback information fed back from the first actively switched converter to the first pin of the control unit.

Furthermore, when the second actively switched converter is not operated by the control unit, the control unit is preferably configured to control the second switching unit to interrupt the second feedback path.

That is, the control unit is preferably configured to control the second switching unit to interrupt the second feedback path, when the second actively switched converter is not operated by the control unit and/or no emergency lighting means is connected to the emergency power supply unit, in particular to the driving unit.

This prevents that the second feedback path, in particular the second measuring unit, constantly draws electrical energy from the energy storage unit, when the second actively switched converter is not operated by the control unit and/or no emergency lighting means is connected to the emergency power supply unit, in particular to the driving unit.

The operation state of the emergency power supply unit, in which the control unit preferably controls the second switching unit to interrupt the second feedback path in order to prevent that the second feedback path constantly draws electrical energy from the energy storage unit, is known as quiescent mode in emergency lighting.

Preferably, the control unit is a microprocessor, an ASIC or an hybrid thereof.

The control unit may be the 32-pin microcontroller *STM32F051K8U7TR* from the company *STMicroelectronics.*

Preferably, the first actively switched converter is a buck converter.

Preferably, the second actively switched converter is a boost converter.

Preferably, the first actively switched converter of the charging unit is a buck converter and the second actively switched converter of the driving unit is a boost converter.

Any of the above optional features may be combined in order to provide the emergency power supply unit according to the present invention.

According to the present invention, an emergency lighting device is also provided, which comprises an emergency power supply unit according to the present invention, as described above, and an emergency lighting means, preferably comprising at least one LED, electrically connected with the emergency power supply unit; wherein the emergency power supply unit is configured to operate the emergency lighting means.

The emergency lighting means may comprise one or more LEDs. In case the emergency lighting means comprises more than one LED, the LEDs may be electrical connected in parallel and/or in series. The present invention is not limited to LEDs as a light source for the emergency lighting means.

According to the present invention, an operating method for operating an emergency power supply unit according to the present invention, as described above, is also provided, wherein the emergency power supply unit comprises: an energy storage unit, preferably a rechargeable battery; a charging unit comprising a first actively switched converter with at least a first switch and at least a first energy storage, wherein the first actively switched converter is configured to charge the energy storage unit with electrical energy from an external electrical energy source; a driving unit comprising a second actively switched converter with at least a second switch and at least a second energy storage, wherein the second actively switched converter is configured to supply an emergency lighting means with electrical energy from the energy storage unit; and a control unit. According to the operating method the control unit operates the first actively switched converter based on feedback information fed back from the first actively switched converter and the second actively switched converter based on feedback-information fed back from the second actively switched converter; characterized in that the control unit receives via a single first pin the feedback information fed back from the first actively switched converter and the feedback information fed back from the second actively switched converter.

Preferably, the control unit monitors via the single first pin the zero crossings of the current flowing through the first energy storage during operation of the first actively switched converter, and the zero crossings of the current flowing through the second energy storage during operation of the second actively switched converter.

Preferably, the control unit operates the first actively switched converter via a second pin, in particular by sending control signals via the second pin to the first actively switched converter; and operates the second actively switched converter via a third pin, in particular by sending control signals via the third pin to the second actively switched converter.

Further, the control unit preferably operates only one of the first actively switched converter and the second actively switched converter at the same time.

That is, the control unit preferably operates the first actively switched converter while the second actively switched converter is not operated, and operates the second actively switched converter while the first actively switched converter is not operated. As a result, only feedback information from one of the first actively switched converter and the second actively switched converter is fed back to the first pin of the control unit at the same time. Preferably, the first actively switched converter feeds back feedback information to the first pin only when it is operated by the control unit, i.e. when the control unit controls the switching of the first switch; and the second actively switched converter feeds back feedback information to the first pin only when it is operated by the control unit, i.e. when the control unit controls the switching of the second switch.

Furthermore, in a charging operation state of the emergency power supply unit the control unit preferably operates only the first actively switched converter based on the feedback information fed back from the first actively switched converter via the single first pin to the control unit in order to charge the energy storage unit with electrical energy from the external electrical energy source.

Moreover, in an emergency operation state of the emergency power supply unit the control unit preferably operates only the second actively switched converter based on the feedback information fed back from the second actively switched converter via the single first pin to the control unit in order to supply the emergency lighting means with electrical energy from the energy storage unit.

Preferably, the control unit operates the first actively switched converter in the borderline conduction mode based on the feedback information fed back from the first actively switched converter via the single first pin to the control unit; and operates the second actively switched converter in the borderline conduction mode based on the feedback information fed back from the second actively switched converter via the single first pin to the control unit.

Moreover, the control unit preferably controls the first switching unit to interrupt the first feedback path; and during the interruption of the first feedback path by the first switching unit the control unit preferably operates at the same time the second actively switched converter in the borderline conduction mode based on the feedback information fed back from the second actively switched converter to the single first pin of the control unit, and the first actively switched converter in the discontinuous conduction mode or continuous conduction mode.

Preferably, the control unit controls the second switching unit to interrupt the second feedback path; and during the interruption of the second feedback path by the second switching unit the control unit preferably operates at the same time the first actively switched converter in the borderline conduction mode based on the feedback information fed back from the first actively switched converter to the single first pin of the control unit, and the second actively switched converter in the discontinuous conduction mode or continuous conduction mode.

Furthermore, when the second actively switched converter is not operated by the control unit, the control unit preferably controls the second switching unit to interrupt the second feedback path.

Any of the above optional features may be combined in order to provide the operating method according to the present invention.

### 4. Description of preferred embodiments

In the following, the invention is described exemplarily with reference to the enclosed figures, in which
- **Figure 1**: is a schematic circuit diagram of an example of an emergency power supply unit according to the prior art;
- **Figure 2**: is a schematic circuit diagram of a further example of an emergency power supply unit according to the prior art;
- **Figure 3**: is a schematic circuit diagram of an embodiment of the emergency power supply unit according to the present invention;
- **Figure 4**: is a schematic circuit diagram of a further embodiment of the emergency power supply unit according to the present invention;
- **Figure 5**: is a schematic circuit diagram of a further embodiment of the emergency power supply unit according to the present invention;
- **Figure 6**: is a schematic circuit diagram of a further embodiment of the emergency power supply unit according to the present invention; and
- **Figure 7**: is a schematic circuit diagram of a further embodiment of the emergency power supply unit according to the present invention.

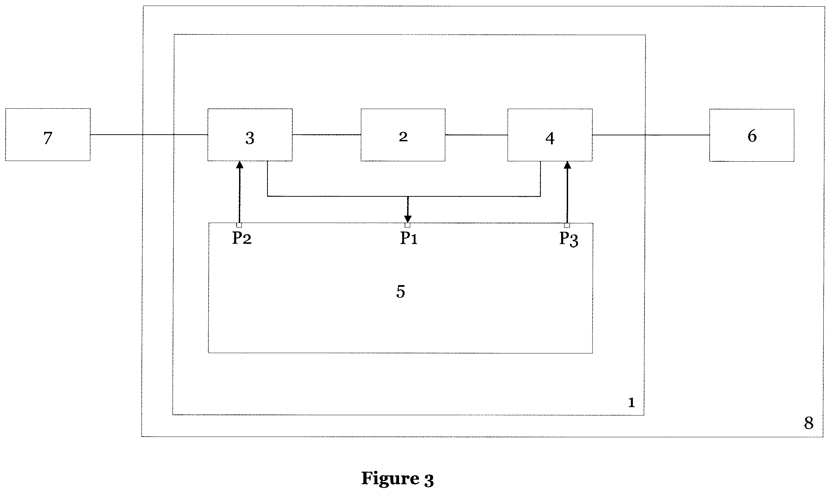

**Figure 3** is a schematic circuit diagram of an embodiment of the emergency power supply unit according to the present invention. The emergency power supply unit 1 according to Figure 3 comprises an energy storage unit 2, a charging unit 3 with a first actively switched converter (not shown), a driving unit 4 with a second actively switched converter (not shown) and a control unit 5. The charging unit 3, in particular the first actively switched converter, is configured to charge the energy storage unit 2 with electrical energy from an external electrical energy source 7. The driving unit 4, in particular the second actively switched converter, is configured to supply electrical energy from the energy storage unit 2 to an emergency lighting means 6. The control unit 5 comprises a first pin P1 and is configured to receive via this single first pin P1 feedback information fed back from the charging unit 3, in particular from the first actively switched converter, as well as feedback information fed back from the driving unit 4, in particular the second actively switched converter. The control unit 5 comprises a second pin P2 for sending control signals to the charging unit 3, in particular to the first actively switched converter, and a third pin P3 for sending control signals to the driving unit 4, in particular to the second actively switched converter.

The functionality and structure of the emergency power supply unit 1 and its elements, namely the energy storage unit 2, the charging unit 3, the first actively switched converter, the driving unit 4, the second actively switched converter and the control unit 5, are as outlined above.

The external electrical energy source 7 and the emergency lighting means 6 are also as outlined above.

The emergency power supply unit 1 and the emergency lighting means 6 may form an emergency lighting device 8 according to the present invention.

The functionality and structure of the emergency lighting device 8 is as outlined above.

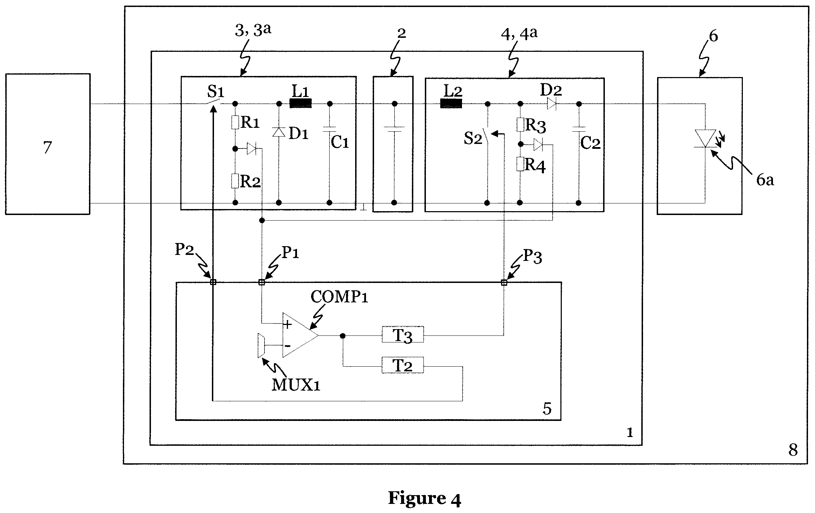

**Figure 4** is a schematic circuit diagram of a further embodiment of the emergency power supply unit according to the present invention. The emergency power supply unit 1 according to Figure 4 basically corresponds to the emergency power supply unit 1 according to Figure 3.

According to Figure 4 the elements of the emergency power supply unit 1 are as follows:
The charging unit 3 comprises a first actively switched converter 3a in form of a buck converter. The buck converter comprises a first switch S1 and a first energy storage L1 in form of an inductor or a choke. The buck converter further comprises a first capacitor C1 and a first diode D1. The first switch S1, the first energy storage L1, the first diode D1 and the first capacitor C1 are electrically connected to each other in such a way that they form a buck converter. Preferably, the charging unit 3 comprises a first measuring unit in the form of a voltage divider made of two resistors R1 and R2. The first measuring unit is electrically connected to the node between the first switch S1, the first energy storage L1 and the first diode D1 of the buck converter and the voltage or measurement signal measured by the first measuring unit indicates the current flowing through the first energy storage L1 during the operation of the buck converter 3a. This voltage or measurement signal measured by the first measuring unit is fed back via a first feedback path to the first pin P1 of the control unit 5. Preferably, there is a diode arranged in the first feedback path in order to prevent feedback information to be supplied from the driving unit 4 to the first measuring unit of the charging unit 3.

The driving unit 4 comprises a second actively switched converter 4a in form of a boost converter. The boost converter comprises a second switch S2 and a second energy storage L2 in form of an inductor or a choke. The boost converter further comprises a second capacitor C2 and a second diode D2. The second switch S2, the second energy storage L2, the second diode D2 and the second capacitor C2 are electrically connected to each other in such a way that they form a boost converter. Preferably, the driving unit 4 comprises a second measuring unit in the form of a voltage divider made of two resistors R3 and R4. The second measuring unit is electrically connected to the node between the second switch S2, the second energy storage L2 and the second diode D2 of the buck converter and the voltage or measurement signal measured by the second measuring unit indicates the current flowing through the second energy storage L2 during the operation of the boost converter 4a. This voltage or measurement signal measured by the second measuring unit is fed back via a second feedback path to the first pin P1 of the control unit 5. Preferably, there is a diode arranged in the second feedback path in order to prevent feedback information to be supplied from the charging unit 3 to the second measuring unit of the driving unit 4**.**

The energy storage unit 2 preferably comprises a rechargeable battery, which is electrically connected to the output of the buck converter 3a of the charging unit 3 and to the input of the boost converter 4a of the driving unit **4.** Thus, the rechargeable battery of the energy storage unit 2 may be charged by the buck converter 3a of the charging unit 3 with electrical energy from an external electrical energy source 7; and the boost converter 4a of the driving unit 4 may supply electrical energy from the rechargeable battery of the energy storage unit 2 to the emergency lighting means 6.

The control unit 5 comprises three pins P1, P2 and P3. The first pin P1 is provided for receiving feedback information from the buck converter 3a and feedback information from the boost converter 4a. That is, as outlined already above, according to the present invention the feedback information from the buck converter 3a and the feedback information from the boost converter 4a are both fed back to the same pin of the control unit 5, namely the first pin P1.

The control unit 5 preferably comprises a comparator COMP1 configured to monitor or detect zero crossings of the current flowing through the first energy storage L1 of the buck converter 3a on the basis of the feedback information fed back from the buck converter 3a to the first pin P1; and to monitor or detect zero crossings of the current flowing through the second energy storage L2 of the boost converter 4a on the basis of the feedback information fed back from the boost converter 4a to the first pin P1.

In particular, one input of the comparator COMP1 is electrical connected to the first pin P1 of the control unit. Preferably, the other input of the comparator COMP1 is connected to a multiplexer MUX1 providing reference values for detecting or monitoring the zero crossings of the current flowing though the first energy storage L1 of the buck converter 3a and the zero crossings of the current flowing through the second energy storage L2 of the boost converter 4a.

The control unit 5 preferably also comprises two timers T2 and T3 configured to generate control signals on the basis of the detection results of the comparator COMP1 in order to operate the buck converter 3a and the boost converter 4a on the basis of the feedback information from the buck converter 3a and the boost converter 4a, respectively. The control unit 5 controls the buck converter 3a via the second pin P2, especially by sending control signals to the buck converter 3a via the second P2. The control unit 5 controls the boost converter 4a via the third pin P3, especially by sending control signals to the boost converter 4a via the third pin P3.

When the control unit 5 operates the boost converter 4a in the borderline conduction mode, then the timer T3 is preferably configured to generate a control signal for switching on the second switch S2 from the non-conducting to the conducting state as a result of the comparator COMP1 detecting a zero crossing of the current flowing through the second energy storage L2 on the basis of the feedback information fed back from the boost converter 4a to the first pin P1 of the control unit 5.

When the control unit 5 operates the buck converter 3a in the borderline conduction mode, then the timer T2 is preferably configured to generate a control signal for switching on the first switch S1 from the non-conducting to the conducting state as a result of the comparator COMP1 detecting a zero crossing of the current flowing through the first energy storage L1 on the basis of the feedback information fed back from the buck converter 3a to the first pin P1 of the control unit 5.

The control unit 5 is preferably configured to operate (actively switch) only one of the buck converter 3a and the boost converter 4a at the same time. That is, the control unit 5 preferably does not operate the buck converter 3a and the boost converter 4a at the same time.

In the charging operation state of the emergency power supply unit (no mains failure), the control unit 5 operates only the buck converter 3a in order to charge the energy storage unit 2 with electrical energy from the external electrical energy source 7. In the emergency operation state of the emergency power supply unit (mains failure), the control unit 5 operates only the boost converter 4a in order to supply the emergency lighting means 6 with electrical energy from the energy storage unit 2.

Preferably, the control unit 5 operates the buck converter 3a and the boost converter 4a in the borderline conduction mode on the basis of the feedback information fed back to the first pin P1 from the buck converter 3a and the boost converter 4a, respectively; wherein the control unit 5 operates only one of the buck converter 3a and the boost converter 4a at the same time.

As a result, when the control unit 5 operates the buck converter 3a, the boost converter 4a is not operated by the control unit 5 at the same time and, thus, only feedback information from the buck converter 3a is received via the first pin P1 by the control unit 5. The control unit 5 uses this feedback information for operating the buck converter 3a preferably in the borderline conduction mode. When the control unit 5 operates the boost converter 4a, the buck converter 3a is not operated by the control unit 5 at the same time and, thus, only feedback information from the boost converter 4a is received via the first pin P1 by the control unit 5. The control unit 5 uses this feedback information for operating the boost converter 4a preferably in the borderline conduction mode.

The emergency lighting means 6 of Figure 4 comprises at least one light-emitting diode 6a (LED).

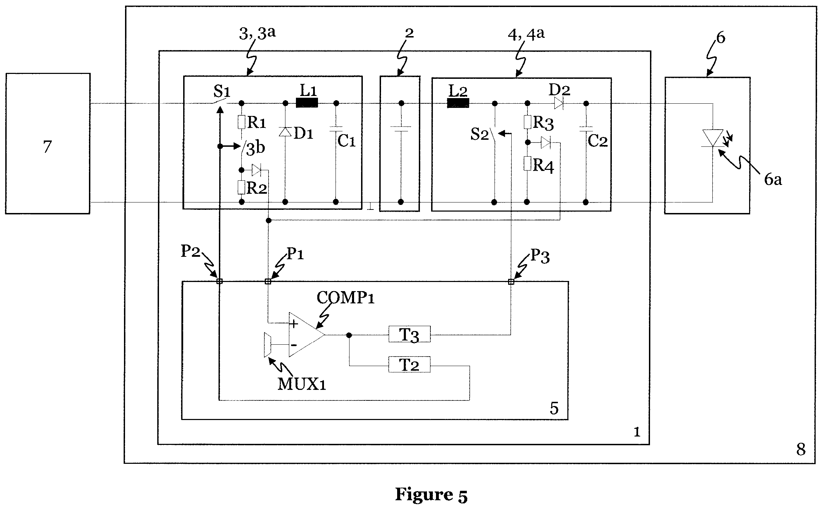

**Figure 5** is a schematic circuit diagram of a further embodiment of the emergency power supply unit according to the present invention. The emergency power supply unit 1 according to Figure 5 basically corresponds to the emergency power supply unit 1 according to Figure 4**.** Thus, in the following mainly the differences between the emergency power supply unit of Figure 5 and the emergency power supply unit of Figure 4 are described.

The charging unit 3 comprises a first switching unit 3b configured to selectively interrupt the first feedback path from the buck converter 3a of the charging unit 3 to the first pin P1 of the control unit 5. Preferably, the first switching unit 3b is part of the buck converter 3a, more preferably of the first measuring unit.

Preferably, the first switching unit 3b comprises or corresponds to a switch, which interrupts the first feedback path when it is in the non-conducting state.

The control unit 5 is preferably configured to control the first switching unit 3b via the second pin P2.

As a result of the first switching unit 3b, the control unit 5 may operate the buck converter 3a and the boost converter 4a at the same time. In detail, the control unit 5 controls the first switching unit 3b to interrupt the first feedback path, such that no feedback information from the buck converter 3a and only feedback information from the boost converter 4a is supplied to the first pin P1 of the control unit 5 during the operation of the buck converter 3a and the boost converter 4a. While the first switching unit 3b interrupts the first feedback path, the control unit 5 may operate at the same time the buck converter 3a in the discontinuous conduction mode or continuous conduction mode and the boost converter 4a in the borderline conduction mode on the basis of the feedback information received via the first pin P1 from the boost converter 4a.

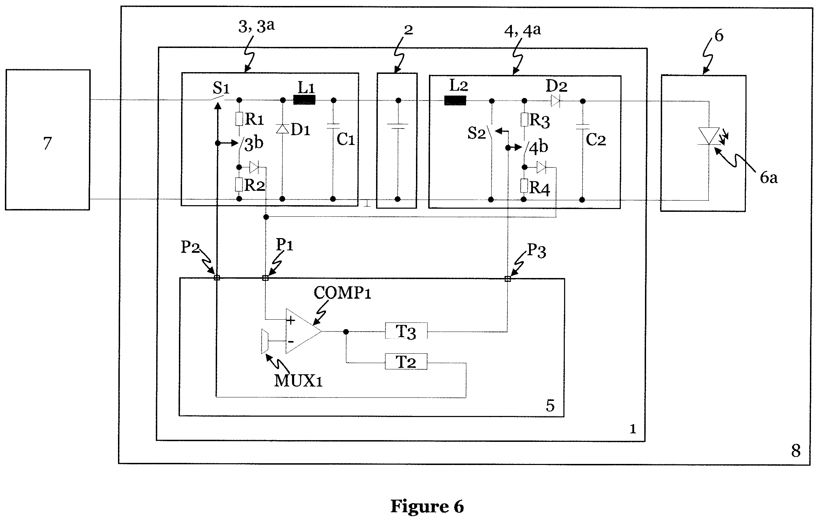

**Figure 6** is a schematic circuit diagram of a further embodiment of the emergency power supply unit according to the present invention. The emergency power supply unit 1 according to Figure 6 basically corresponds to the emergency power supply unit 1 according to Figure 5. Thus, in the following mainly the differences between the emergency power supply unit of Figure 6 and the emergency power supply unit of Figure 5 are described.

The driving unit 4 comprises a second switching unit 4b configured to selectively interrupt the second feedback path from the boost converter 4a of the driving unit 4 to the first pin P1 of the control unit 5. Preferably, the second switching unit 4b is part of the boost converter 4a, more preferably of the second measuring unit.

Preferably, the second switching unit 4b comprises or corresponds to a switch, which interrupts the second feedback path when it is in the non-conducting state.

The control unit 5 is preferably configured to control the second switching unit 4b via the third pin P3.

According to Figure 6, the second switching unit 4b is connected in series between the two resistors R3 and R4 of the second measuring unit. Thus, when the control unit 5 controls the second switching unit 4b to interrupt the second feedback path, no electrical energy is drawn by the second measuring unit from the energy storage unit 2**.**

Preferably, the control unit 5 controls the second switching unit 4b to interrupt the second feedback path, when the boost converter 4a is not operated and/or no emergency lighting means are connected to the driving unit 4 in order to prevent that the second feedback path, in particular the second measuring unit, constantly draws electrical energy from the energy storage unit 2**.**

Furthermore, as a result of the second switching unit 4b, the control unit 5 may operate the buck converter 3a and the boost converter 4a at the same time. In detail, the control unit 5 controls the second switching unit 4b to interrupt the second feedback path, such that no feedback information from the boost converter 4a and only feedback information from the buck converter 3a is supplied to the first pin P1 of the control unit 5 during the operation of the buck converter 3a and the boost converter 4a. While the second switching unit 4b interrupts the second feedback path, the control unit 5 may operate at the same time the boost converter 4a in the discontinuous conduction mode or continuous conduction mode and the buck converter 3a in the borderline conduction mode on the basis of the feedback information received via the first pin P1 from the buck converter 3a.

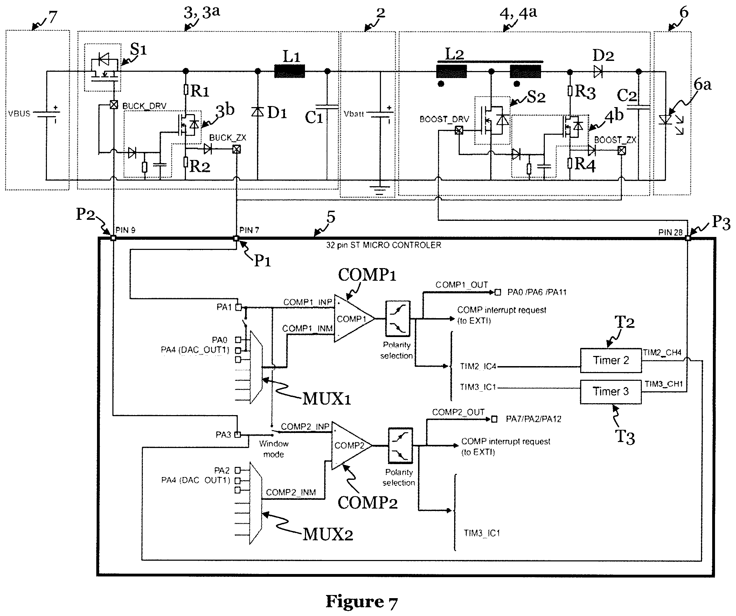

**Figure 7** is a schematic circuit diagram of a further embodiment of the emergency power supply unit according to the present invention.

The emergency power supply unit according to Figure 7 corresponds to the emergency power supply unit according to Figure 2, which has been adapted according to the present invention. Therefore, in the emergency power supply unit according to Figure 7, the feedback information from the buck converter 3a of the charging unit 3 and the feedback information from the boost converter 4a of the driving unit 4 are both fed back to the same pin P1 of the control unit 5. As a result, in the control unit 5, which is preferably a 32-pin microcontroller, in particular the 32-pin microcontroller *STM32F051K8U7TR* from the company *STMicroelectronics,* only the comparator COMP1 is needed for evaluating the feedback information from the buck converter 3a and the boost converter 4a. Thus, the further comparator COMP2, which corresponds to the comparator COMP2' of the control unit 5' of Figure 2, may be used for additional features, such as a DALI-functionality, that may be implemented in the emergency power supply unit.

Moreover, in the emergency power supply unit of Figure 7 only two timers T2 and T3 of the control unit 5 are used for the operation of the buck converter 3a of the charging unit 3 and the boost converter 4a of the driving unit 4**.** In contrast thereto, in the emergency power supply unit of Figure 2 (prior art) three timers T1', T2' and T3' are blocked by the operation of the buck converter of the charging unit 3'and the boost converter of the driving unit 4'.

Furthermore, in the emergency power supply unit of Figure 7 only three pins P1, P2 and P3 are needed for controlling the buck converter 3a of the charging unit 3 and the boost converter 4a of the driving unit 4 on the basis of feedback information in the borderline conduction mode. In contrast thereto, in the emergency power supply unit of Figure 2 (prior art) six pins P1' to P6'are needed for controlling the buck converter of the charging unit 3' and the boost converter of the driving unit 4' on the basis of feedback information in the borderline conduction mode.

Therefore, the emergency power supply unit according to the present invention, as shown in Figure 7, is advantageous compared to the prior art emergency power supply unit, as shown in Figure 2, because according to the present invention three pins less, one comparator less and one timer less of the control unit 5 are needed for controlling the charging unit and driving unit.

In addition, Figure 7 shows an example of an implementation of a first switching unit 3b that allows the first switching unit 3b to be controlled by the control signals for controlling the buck converter 3a, which are send by the control unit 5 via the second pin P2 to the buck converter 3a of the charging unit 3. Figure 7 also shows an example of an implementation of a second switching unit 4b that allows the second switching unit 4b to be controlled by the control signals for controlling the boost converter 4a, which are send by the control unit 5 via the third pin P3 to the boost converter 4a of the driving unit 4**.**

## Claims

1. Emergency power supply unit (1) for operating an emergency lighting means (6), preferably comprising at least one LED (6a); wherein the emergency power supply unit (1) comprises:
- an energy storage unit (2), preferably a rechargeable battery;
- a charging unit (3) comprising a first actively switched converter (3a) with at least a first switch (S1) and at least a first energy storage (L1), wherein the first actively switched converter (3a) is configured to charge the energy storage unit (2) with electrical energy from an external electrical energy source (7);
- a driving unit (4) comprising a second actively switched converter (4a) with at least a second switch (S2) and at least a second energy storage (L2), wherein the second actively switched converter (4a) is configured to supply the emergency lighting means (6) with electrical energy from the energy storage unit (2); and
- a control unit (5) configured to operate
- the first actively switched converter (3a) based on feedback information fed back from the first actively switched converter (3a) and
- the second actively switched converter (4a) based on feedback information fed back from the second actively switched converter (4a);
**characterized in that**
- the control unit (5) is configured to receive via a single first pin (P1) the feedback information fed back from the first actively switched converter (3a) and the feedback information fed back from the second actively switched converter (4a).

2. Emergency power supply unit (1) according to claim 1, wherein
- the feedback information from the first actively switched converter (3a) indicates the current flowing through the first energy storage (L1), in particular zero crossings of the current flowing through the first energy storage (L1), during the operation of the first actively switched converter (3a); and/or
- the feedback information from the second actively switched converter (4a) indicates the current flowing through the second energy storage (L2), in particular zero crossings of the current flowing through the second energy storage (L2), during the operation of the second actively switched converter (4a).

3. Emergency power supply unit (1) according to any one of the previous claims,
- wherein the control unit (5) is configured to monitor via the single first pin (P1)
- the zero crossings of the current flowing through the first energy storage (L1) during operation of the first actively switched converter (3a), and
- the zero crossings of the current flowing through the second energy storage (L2) during operation of the second actively switched converter (4a).

4. Emergency power supply unit (1) according to any one of the previous claims,
- wherein the control unit (5) comprises a comparator (COMP1) for monitoring the zero crossings of the current flowing through the first energy storage (L1) during operation of the first actively switched converter (3a) and the zero crossings of the current flowing through the second energy storage (L2) during operation of the second actively switched converter (4a); and
- wherein one input of the comparator (COMP1) is electrically connected to the single first pin (P1) of the control unit (5).

5. Emergency power supply unit (1) according to any one of the previous claims,
- wherein the control unit (5) is configured to operate the first actively switched converter (3a) via a second pin (P2), in particular by sending control signals via the second pin (P2) to the first actively switched converter (3a); and
- wherein the control unit (5) is configured to operate the second actively switched converter (4a) via a third pin (P3), in particular by sending control signals via the third pin (P3) to the second actively switched converter (4a).

6. Emergency power supply unit (1) according to any one of the previous claims,
- wherein the control unit (5) is configured to operate only one of the first actively switched converter (3a) and the second actively switched converter (4a) at the same time.

7. Emergency power supply unit (1) according to any one of the previous claims,
- wherein in a charging operation state of the emergency power supply unit (1) the control unit (5) is configured to operate only the first actively switched converter (3a) based on the feedback information fed back from the first actively switched converter (3a) via the single first pin (P1) to the control unit (5) in order to charge the energy storage unit (2) with electrical energy from the external electrical energy source (7).

8. Emergency power supply unit (1) according to any one of the previous claims,
- wherein in an emergency operation state of the emergency power supply unit (1) the control unit (5) is configured to operate only the second actively switched converter (4a) based on the feedback information fed back from the second actively switched converter (4a) via the single first pin (P1) to the control unit (5) in order to supply the emergency lighting means (6) with electrical energy from the energy storage unit (2).

9. Emergency power supply unit (1) according to any one of the previous claims,
- wherein the control unit (5) is configured to operate
- the first actively switched converter (3a) in the borderline conduction mode based on the feedback information fed back from the first actively switched converter (3a) via the single first pin (P1) to the control unit (5), and
- the second actively switched converter (4a) in the borderline conduction mode based on the feedback information fed back from the second actively switched converter (4a) via the single first pin (P1) to the control unit (5).

10. Emergency power supply unit (1) according to any one of the previous claims, comprising
- a first feedback path electrically connecting the first actively switched converter (3a) with the single first pin (P1) of the control unit (5) for feeding back the feedback information from the first actively switched converter (3a) to the single first pin (P1) of the control unit (5), and
- a first switching unit (3b) configured to selectively interrupt the first feedback path.

11. Emergency power supply unit (1) according to claim 10,
- wherein the control unit (5) is configured to control the first switching unit (3b) to interrupt the first feedback path; and
- wherein during the interruption of the first feedback path by the first switching unit (3b) the control unit (5) is configured to operate at the same time
- the second actively switched converter (4a) in the borderline conduction mode based on the feedback information fed back from the second actively switched converter (4a) to the single first pin (P1) of the control unit (5), and
- the first actively switched converter (3a) in the discontinuous conduction mode or continuous conduction mode.

12. Emergency power supply unit (1) according to any one of the previous claims, comprising
- a second feedback path electrically connecting the second actively switched converter (4a) with the single first pin (P1) of the control unit (5) for feeding back the feedback information from the second actively switched converter (4a) to the single first pin (P1) of the control unit (5), and
- a second switching unit (4b) configured to selectively interrupt the second feedback path,
wherein preferably
when the second actively switched converter (4a) is not operated by the control unit (5), the control unit (5) is configured to control the second switching unit (4b) to interrupt the second feedback path.

13. Emergency power supply unit (1) according to any one of the previous claims,
- wherein the first actively switched converter (3a) is a buck converter and/or
- wherein the second actively switched converter (4a) is a boost converter.

14. Emergency lighting device (8), comprising
- an emergency power supply unit (1) according to any one of the previous claims, and
- an emergency lighting means (6), preferably comprising at least one LED (6a), electrically connected with the emergency power supply unit (1);
- wherein the emergency power supply unit (1) is configured to operate the emergency lighting means (6).

15. Operating method for operating an emergency power supply unit (1) according to any one of claims 1 to 13, wherein the emergency power supply unit (1) comprises:
- an energy storage unit (2), preferably a rechargeable battery;
- a charging unit (3) comprising a first actively switched converter (3a) with at least a first switch (S1) and at least a first energy storage (L1), wherein the first actively switched converter (3a) is configured to charge the energy storage unit (2) with electrical energy from an external electrical energy source (7);
- a driving unit (4) comprising a second actively switched converter (4a) with at least a second switch (S2) and at least a second energy storage (L2), wherein the second actively switched converter (4a) is configured to supply an emergency lighting means (6) with electrical energy from the energy storage unit (2); and
- a control unit (5);
- wherein according to the method
- the control unit (5) operates the first actively switched converter (3a) based on feedback information fed back from the first actively switched converter (3a) and the second actively switched converter (4a) based on feedback-information fed back from the second actively switched converter;
**characterized in that**
- the control unit (5) receives via a single first pin (P1) the feedback information fed back from the first actively switched converter (3a) and the feedback information fed back from the second actively switched converter (4a).

## Patentansprüche

1. Notfallnetzteil (1) zum Betreiben eines Notfallleuchtmittels (6), vorzugsweise umfassend mindestens eine LED (6a); wobei das Notfallnetzteil (1) umfasst:
- eine Energiespeichereinheit (2), vorzugsweise eine wiederaufladbare Batterie;
- eine Ladeeinheit (3), umfassend einen ersten aktiv geschalteten Wandler (3a) mit mindestens einem ersten Schalter (S1) und mindestens einem ersten Energiespeicher (L1), wobei der erste aktiv geschaltete Wandler (3a) konfiguriert ist, um die Energiespeichereinheit (2) mit elektrischer Energie aus einer externen elektrischen Energiequelle (7) zu laden;
- eine Ansteuereinheit (4), umfassend einen zweiten aktiv geschalteten Wandler (4a) mit mindestens einem zweiten Schalter (S2) und mindestens einem zweiten Energiespeicher (L2), wobei der zweite aktiv geschaltete Wandler (4a) konfiguriert ist, um das Notfallleuchtmittel (6) mit elektrischer Energie aus der Energiespeichereinheit (2) zu versorgen; und
- eine Steuereinheit (5), die konfiguriert ist zum Betreiben
- des ersten aktiv geschalteten Wandlers (3a) basierend auf Rückkopplungsinformationen, die von dem ersten aktiv geschalteten Wandler (3a) rückgekoppelt werden, und
- des zweiten aktiv geschalteten Wandlers (4a) basierend auf Rückkopplungsinformationen, die von dem zweiten aktiv geschalteten Wandler (4a) rückgekoppelt werden;
**dadurch gekennzeichnet, dass**
- die Steuereinheit (5) konfiguriert ist, um über einen einzelnen ersten Pin (P1) die Rückkopplungsinformationen, die von dem ersten aktiv geschalteten Wandler (3a) rückgekoppelt werden, und die Rückkopplungsinformationen, die von dem zweiten aktiv geschalteten Wandler (4a) rückgekoppelt werden, zu empfangen.

2. Notfallnetzteil (1) nach Anspruch 1, wobei
- die Rückkopplungsinformationen von dem ersten aktiv geschalteten Wandler (3a) den Strom, der durch den ersten Energiespeicher (L1) fließt, insbesondere Nulldurchgänge des Stroms, der durch den ersten Energiespeicher (L1) während des Betriebs des ersten aktiv geschalteten Wandlers (3a) fließt, angeben; und/oder
- die Rückkopplungsinformationen von dem zweiten aktiv geschalteten Wandlers (4a) den Strom, der durch den zweiten Energiespeicher (L2) fließt, insbesondere Nulldurchgänge des Stroms, der durch den zweiten Energiespeicher (L2) während des Betriebs des zweiten aktiv geschalteten Wandlers (4a) fließt, angeben.

3. Notfallnetzteil (1) nach einem der vorstehenden Ansprüche,
- wobei die Steuereinheit (5) konfiguriert ist zum Überwachen, über den einzelnen ersten Pin (P1)
- der Nulldurchgänge des Stroms, der durch den ersten Energiespeicher (L1) während des Betriebs des ersten aktiv geschalteten Wandlers (3a) fließt, und
- der Nulldurchgänge des Stroms, der durch den zweiten Energiespeicher (L2) während des Betriebs des zweiten aktiv geschalteten Wandlers (4a) fließt.

4. Notfallnetzteil (1) nach einem der vorstehenden Ansprüche,
- wobei die Steuereinheit (5) einen Komparator (COMP1) zum Überwachen der Nulldurchgänge des Stroms, der durch den ersten Energiespeicher (L1) während des Betriebs des ersten aktiv geschalteten Wandlers (3a) fließt, und der Nulldurchgänge des Stroms, der durch den zweiten Energiespeicher (L2) während des Betriebs des zweiten aktiv geschalteten Wandlers (4a) fließt, umfasst; und
- wobei ein Eingang des Komparators (COMP1) mit dem einzelnen ersten Pin (P1) der Steuereinheit (5) elektrisch verbunden ist.

5. Notfallnetzteil (1) nach einem der vorstehenden Ansprüche,
- wobei die Steuereinheit (5) konfiguriert ist, um den ersten aktiv geschalteten Wandler (3a) über einen zweiten Pin (P2) zu betreiben, insbesondere durch Senden von Steuersignalen über den zweiten Pin (P2) an den ersten aktiv geschalteten Wandler (3a); und
- wobei die Steuereinheit (5) konfiguriert ist, um den zweiten aktiv geschalteten Wandler (4a) über einen dritten Pin (P3) zu betreiben, insbesondere durch Senden von Steuersignalen über den dritten Pin (P3) an den zweiten aktiv geschalteten Wandler (4a).

6. Notfallnetzteil (1) nach einem der vorstehenden Ansprüche,
- wobei die Steuereinheit (5) konfiguriert ist, um gleichzeitig nur einen von dem ersten aktiv geschalteten Wandler (3a) und dem zweiten aktiv geschalteten Wandler (4a) zu betreiben.

7. Notfallnetzteil (1) nach einem der vorstehenden Ansprüche,
- wobei in einem Ladebetriebszustand des Notfallnetzteils (1) die Steuereinheit (5) konfiguriert ist, um nur den ersten aktiv geschalteten Wandler (3a) zu betreiben, basierend auf den Rückkopplungsinformationen, die von dem ersten aktiv geschalteten Wandler (3a) über den einzelnen ersten Pin (P1) an die Steuereinheit (5) rückgekoppelt werden, um die Energiespeichereinheit (2) mit elektrischer Energie von der externen elektrischen Energiequelle (7) zu laden.

8. Notfallnetzteil (1) nach einem der vorstehenden Ansprüche,
- wobei in einem Notfallbetriebszustand des Notfallnetzteils (1) die Steuereinheit (5) konfiguriert ist, um nur den zweiten aktiv geschalteten Wandler (4a) zu betreiben, basierend auf den Rückkopplungsinformationen, die von dem zweiten aktiv geschalteten Wandler (4a) über den einzelnen ersten Pin (P1) an die Steuereinheit (5) rückgekoppelt werden, um das Notfallleuchtmittel (6) mit elektrischer Energie von der Energiespeichereinheit (2) zu versorgen.

9. Notfallnetzteil (1) nach einem der vorstehenden Ansprüche,
- wobei die Steuereinheit (5) konfiguriert ist zum Betreiben
- des ersten aktiv geschalteten Wandlers (3a) in dem Grenzleitungsmodus basierend auf den Rückkopplungsinformationen, die von dem ersten aktiv geschalteten Wandler (3a) über den einzelnen ersten Pin (P1) an die Steuereinheit (5) rückgekoppelt werden, und
- des zweiten aktiv geschalteten Wandlers (4a) in dem Grenzleitungsmodus basierend auf den Rückkopplungsinformationen, die von dem zweiten aktiv geschalteten Wandler (4a) über den einzelnen ersten Pin (P1) an die Steuereinheit (5) zurückgemeldet werden.

10. Notfallnetzteil (1) nach einem der vorstehenden Ansprüche, umfassend
- einen ersten Rückkopplungspfad, der den ersten aktiv geschalteten Wandler (3a) mit dem einzelnen ersten Pin (P1) der Steuereinheit (5) elektrisch verbindet, zum Rückkoppeln der Rückkopplungsinformationen von dem ersten aktiv geschalteten Wandler (3a) an den einzelnen ersten Pin (P1) der Steuereinheit (5), und
- eine erste Schalteinheit (3b), die konfiguriert ist, um den ersten Rückkopplungspfad selektiv zu unterbrechen.

11. Notfallnetzteil (1) nach Anspruch 10,
- wobei die Steuereinheit (5) konfiguriert ist, um die erste Schalteinheit (3b) zu steuern, um den ersten Rückkopplungspfad zu unterbrechen; und
- wobei während der Unterbrechung des ersten Rückkopplungspfads durch die erste Schalteinheit (3b) die Steuereinheit (5) konfiguriert ist, um gleichzeitig Folgende zu betreiben
- den zweiten aktiv geschalteten Wandler (4a) in dem Grenzleitungsmodus basierend auf den Rückkopplungsinformationen, die von dem zweiten aktiv geschalteten Wandler (4a) an den einzelnen ersten Pin (P1) der Steuereinheit (5) rückgekoppelt werden, und
- den ersten aktiv geschalteten Wandler (3a) in dem diskontinuierlichen Leitungsmodus oder in dem kontinuierlichen Leitungsmodus.

12. Notfallnetzteil (1) nach einem der vorstehenden Ansprüche, umfassend
- einen zweiten Rückkopplungspfad, der den zweiten aktiv geschalteten Wandler (4a) mit dem einzelnen ersten Pin (P1) der Steuereinheit (5) elektrisch verbindet, zum Rückkoppeln der Rückkopplungsinformationen von dem zweiten aktiv geschalteten Wandler (4a) an den einzelnen ersten Pin (P1) der Steuereinheit (5), und
- eine zweite Schalteinheit (4b), die konfiguriert ist, um den zweiten Rückkopplungspfad selektiv zu unterbrechen,
wobei vorzugsweise
wenn der zweite aktiv geschaltete Wandler (4a) nicht durch die Steuereinheit (5) betrieben wird, ist die Steuereinheit (5) konfiguriert ist, um die zweite Schalteinheit (4b) zu steuern, um den zweiten Rückkopplungspfad zu unterbrechen.

13. Notfallnetzteil (1) nach einem der vorstehenden Ansprüche,
- wobei der erste aktiv geschaltete Wandler (3a) ein Abwärtswandler ist und/oder
- wobei der zweite aktiv geschaltete Wandler (4a) ein Aufwärtswandler ist.

14. Notfallleuchtvorrichtung (8), umfassend
- ein Notfallnetzteil (1) nach einem der vorstehenden Ansprüche, und
- ein Notfallleuchtmittel (6), vorzugsweise umfassend mindestens eine LED (6a), die mit dem Notfallnetzteil (1) elektrisch verbunden ist;
- wobei das Notfallnetzteil (1) konfiguriert ist, um das Notfallleuchtmittel (6) zu betreiben.

15. Betriebsverfahren zum Betreiben eines Notfallnetzteils (1) nach einem der Ansprüche 1 bis 13, wobei das Notfallnetzteil (1) umfasst:
- eine Energiespeichereinheit (2), vorzugsweise eine wiederaufladbare Batterie;
- eine Ladeeinheit (3), umfassend einen ersten aktiv geschalteten Wandler (3a) mit mindestens einem ersten Schalter (S1) und mindestens einem ersten Energiespeicher (L1), wobei der erste aktiv geschaltete Wandler (3a) konfiguriert ist, um die Energiespeichereinheit (2) mit elektrischer Energie aus einer externen elektrischen Energiequelle (7) zu laden;
- eine Ansteuereinheit (4), umfassend einen zweiten aktiv geschalteten Wandler (4a) mit mindestens einem zweiten Schalter (S2) und mindestens einem zweiten Energiespeicher (L2), wobei der zweite aktiv geschaltete Wandler (4a) konfiguriert ist, um ein Notfallleuchtmittel (6) mit elektrischer Energie aus der Energiespeichereinheit (2) zu versorgen; und eine Steuereinheit (5);
- wobei nach dem Verfahren
- die Steuereinheit (5) den ersten aktiv geschalteten Wandler (3a) betreibt, basierend auf Rückkopplungsinformationen, die von dem ersten aktiv geschalteten Wandler (3a) und dem zweiten aktiv geschalteten Wandler (4a) rückgekoppelt werden, basierend auf Rückkopplungsinformationen, die von dem zweiten aktiv geschalteten Wandler rückgekoppelt werden;
**dadurch gekennzeichnet, dass**
- die Steuereinheit (5) über einen einzelnen ersten Pin (P1) die Rückkopplungsinformationen, die von dem ersten aktiv geschalteten Wandler (3a) rückgekoppelt werden, und die Rückkopplungsinformationen, die von dem zweiten aktiv geschalteten Wandler (4a) rückgekoppelt werden, empfängt.

## Revendications

1. Unité d'alimentation en puissance de secours (1) permettant de faire fonctionner un moyen d'éclairage de secours (6), comprenant de préférence au moins une DEL (6a) ; dans laquelle l'unité d'alimentation en puissance de secours (1) comprend :
- une unité de stockage d'énergie (2), de préférence une batterie rechargeable ;
- une unité de charge (3) comprenant un premier convertisseur à commutation active (3a) avec au moins un premier commutateur (S1) et au moins un premier stockage d'énergie (L1), dans laquelle le premier convertisseur à commutation active (3a) est conçu pour charger l'unité de stockage d'énergie (2) avec de l'énergie électrique provenant d'une source d'énergie électrique externe (7) ;
- une unité de pilotage (4) comprenant un second convertisseur à commutation active (4a) avec au moins un second commutateur (S2) et au moins un second stockage d'énergie (L2), dans laquelle le second convertisseur à commutation active (4a) est conçu pour alimenter les moyens d'éclairage de secours (6) en énergie électrique provenant de l'unité de stockage d'énergie (2) ; et
- une unité de commande (5) conçue pour faire fonctionner
- le premier convertisseur à commutation active (3a) en fonction d'informations de retour renvoyées par le premier convertisseur à commutation active (3a) et
- le second convertisseur à commutation active (4a) en fonction d'informations de retour renvoyées par le second convertisseur à commutation active (4a) ;
**caractérisée en ce que**
- l'unité de commande (5) est conçue pour recevoir, par l'intermédiaire d'une première broche unique (P1), les informations de retour renvoyées par le premier convertisseur à commutation active (3a) et les informations de retour renvoyées par le second convertisseur à commutation active (4a).

2. Unité d'alimentation en puissance de secours (1) selon la revendication 1, dans laquelle
- les informations de retour provenant du premier convertisseur à commutation active (3a) indiquent le courant traversant le premier stockage d'énergie (L1), en particulier les passages par zéro du courant traversant le premier stockage d'énergie (L1), pendant le fonctionnement du premier convertisseur à commutation active (3a) ; et/ou
- les informations de retour provenant du second convertisseur à commutation active (4a) indiquent le courant traversant le second stockage d'énergie (L2), en particulier les passages par zéro du courant traversant le second stockage d'énergie (L2), pendant le fonctionnement du second convertisseur à commutation active (4a).

3. Unité d'alimentation en puissance de secours (1) selon l'une quelconque des revendications précédentes,
- dans laquelle l'unité de commande (5) est conçue pour surveiller par l'intermédiaire de la première broche unique (P1)
- les passages par zéro du courant traversant le premier stockage d'énergie (L1) pendant le fonctionnement du premier convertisseur à commutation active (3a), et
- les passages par zéro du courant traversant le second stockage d'énergie (L2) pendant le fonctionnement du second convertisseur à commutation active (4a).

4. Unité d'alimentation en puissance de secours (1) selon l'une quelconque des revendications précédentes,
- dans laquelle l'unité de commande (5) comprend un comparateur (COMP1) pour surveiller les passages par zéro du courant traversant le premier stockage d'énergie (L1) pendant le fonctionnement du premier convertisseur à commutation active (3a) et les passages par zéro du courant traversant le second stockage d'énergie (L2) pendant le fonctionnement du second convertisseur à commutation active (4a) ; et
- dans laquelle une entrée du comparateur (COMP1) est connectée électriquement à la première broche unique (P1) de l'unité de commande (5).

5. Unité d'alimentation en puissance de secours (1) selon l'une quelconque des revendications précédentes,
- l'unité de commande (5) est conçue pour faire fonctionner le premier convertisseur à commutation active (3a) par l'intermédiaire d'une deuxième broche (P2), en particulier en envoyant des signaux de commande au premier convertisseur à commutation active (3a) par l'intermédiaire de la deuxième broche (P2) ; et
- l'unité de commande (5) est conçue pour faire fonctionner le second convertisseur à commutation active (4a) par l'intermédiaire d'une troisième broche (P3), en particulier en envoyant des signaux de commande au second convertisseur à commutation active (4a) par l'intermédiaire de la troisième broche (P3).

6. Unité d'alimentation en puissance de secours (1) selon l'une quelconque des revendications précédentes,
- l'unité de commande (5) est conçue pour faire fonctionner un seul du premier convertisseur à commutation active (3a) et du second convertisseur à commutation active (4a) en même temps.

7. Unité d'alimentation en puissance de secours (1) selon l'une quelconque des revendications précédentes,
- dans laquelle, dans un état de fonctionnement de charge de l'unité d'alimentation en puissance de secours (1), l'unité de commande (5) est conçue pour faire fonctionner uniquement le premier convertisseur à commutation active (3a) en fonction des informations de retour renvoyées par le premier convertisseur à commutation active (3a) par l'intermédiaire de la première broche unique (P1) à l'unité de commande (5) afin de charger l'unité de stockage d'énergie (2) avec de l'énergie électrique provenant de la source d'énergie électrique externe (7).

8. Unité d'alimentation en puissance de secours (1) selon l'une quelconque des revendications précédentes,
- dans laquelle, dans un état de fonctionnement de secours de l'unité d'alimentation en puissance de secours (1), l'unité de commande (5) est conçue pour faire fonctionner uniquement le second convertisseur à commutation active (4a) en fonction des informations de retour renvoyées par le second convertisseur à commutation active (4a) par l'intermédiaire de la première broche unique (P1) à l'unité de commande (5) afin d'alimenter les moyens d'éclairage de secours (6) en énergie électrique provenant de l'unité de stockage de l'énergie (2).

9. Unité d'alimentation en puissance de secours (1) selon l'une quelconque des revendications précédentes,
- dans laquelle l'unité de commande (5) est conçue pour faire fonctionner
- le premier convertisseur à commutation active (3a) dans le mode de conduction limite en fonction des informations de retour renvoyées par le premier convertisseur à commutation active (3a) par l'intermédiaire de la première broche unique (P1) à l'unité de commande (5), et
- le second convertisseur à commutation active (4a) dans le mode de conduction limite en fonction des informations de retour renvoyées par le second convertisseur à commutation active (4a) par l'intermédiaire de la première broche unique (P1) à l'unité de commande (5).

10. Unité d'alimentation en puissance de secours (1) selon l'une quelconque des revendications précédentes, comprenant
- un premier chemin de retour connectant électriquement le premier convertisseur à commutation active (3a) à la première broche unique (P1) de l'unité de commande (5) pour renvoyer les informations de retour du premier convertisseur à commutation active (3a) à la première broche unique (P1) de l'unité de commande (5), et
- une première unité de commutation (3b) conçue pour interrompre sélectivement le premier chemin de retour.

11. Unité d'alimentation en puissance de secours (1) selon la revendication 10,
- dans laquelle l'unité de commande (5) est conçue pour commander la première unité de commutation (3b) afin d'interrompre le premier chemin de retour ; et
- dans laquelle pendant l'interruption du premier chemin de retour par la première unité de commutation (3b), l'unité de commande (5) est conçue pour faire fonctionner simultanément
- le second convertisseur à commutation active (4a) dans le mode de conduction limite en fonction des informations de retour renvoyées par le second convertisseur à commutation active (4a) à la première broche unique (P1) de l'unité de commande (5), et
- le premier convertisseur à commutation active (3a) dans le mode de conduction discontinue ou le mode de conduction continue.

12. Unité d'alimentation en puissance de secours (1) selon l'une quelconque des revendications précédentes, comprenant
- un second chemin de retour connectant électriquement le second convertisseur à commutation active (4a) à la première broche unique (P1) de l'unité de commande (5) pour renvoyer les informations de retour du second convertisseur à commutation active (4a) à la première broche unique (P1) de l'unité de commande (5), et
- une seconde unité de commutation (4b) conçue pour interrompre sélectivement le second chemin de retour,
dans laquelle, de préférence
lorsque le second convertisseur à commutation active (4a) n'est pas mis en fonctionnement par l'unité de commande (5), l'unité de commande (5) est conçue pour commander la seconde unité de commutation (4b) afin d'interrompre le second chemin de retour.

13. Unité d'alimentation en puissance de secours (1) selon l'une quelconque des revendications précédentes,
- dans laquelle le premier convertisseur à commutation active (3a) est un convertisseur abaisseur et/ou
- dans laquelle le second convertisseur à commutation active (4a) est un convertisseur élévateur.

14. Dispositif d'éclairage de secours (8) comprenant
- une unité d'alimentation en puissance de secours (1) selon l'une quelconque des revendications précédentes, et
- un moyen d'éclairage de secours (6), comprenant de préférence au moins une DEL (6a), connectée électriquement à l'unité d'alimentation en puissance de secours (1) ;
- dans lequel l'unité d'alimentation en puissance de secours (1) est conçue pour faire fonctionner les moyens d'éclairage de secours (6).

15. Procédé de fonctionnement pour faire fonctionner une unité d'alimentation en puissance de secours (1) selon l'une quelconque des revendications 1 à 13, dans lequel l'unité d'alimentation en puissance de secours (1) comprend :
- une unité de stockage d'énergie (2), de préférence une batterie rechargeable ;
- une unité de charge (3) comprenant un premier convertisseur à commutation active (3a) avec au moins un premier commutateur (S1) et au moins un premier stockage d'énergie (L1), dans laquelle le premier convertisseur à commutation active (3a) est conçu pour charger l'unité de stockage d'énergie (2) avec de l'énergie électrique provenant d'une source d'énergie électrique externe (7) ;
- une unité de pilotage (4) comprenant un second convertisseur à commutation active (4a) avec au moins un second commutateur (S2) et au moins un second stockage d'énergie (L2), dans lequel le second convertisseur à commutation active (4a) est conçu pour alimenter un moyen d'éclairage de secours (6) en énergie électrique provenant de l'unité de stockage d'énergie (2) ;
- et une unité de commande (5) ;
- dans lequel, selon le procédé
- l'unité de commande (5) fait fonctionner le premier convertisseur à commutation active (3a) en fonction des informations de retour renvoyées par le premier convertisseur à commutation active (3a) et le second convertisseur à commutation active (4a) en fonction des informations de retour renvoyées par le second convertisseur à commutation active ;
**caractérisé en ce que**
- l'unité de commande (5) reçoit, par l'intermédiaire d'une première broche unique (P1), les informations de retour renvoyées par le premier convertisseur à commutation active (3a) et les informations de retour renvoyées par le second convertisseur à commutation active (4a).
